# EUROPÄISCHE PATENTANMELDUNG

(11) **EP 1 901 187 A2**
(43) Veröffentlichungstag der Anmeldung: **19.03.2008**
(21) Anmeldenummer: 07116260.6
(22) Anmeldetag: 12.09.2007
(51) Int. Cl.: G06F 17/30

(54) **Verfahren zur Suche nach Nutzdaten in Datenbanken von unterhaltungselektronischen Geräten**

(30) Priorität: 16.09.2006 DE 102006043565
(71) Anmelder: LOEWE OPTA GmbH, 96317 Kronach (DE)
(72) Erfinder: Gaidzik, Roland, 96369, Weißenbrunn (DE); Weickert, Bernd, 96224, Burgkunstadt (DE)
(74) Vertreter: Kinnstätter, Klaus

(57) **Zusammenfassung**

Bei einem Verfahren zur textbasierten Suche nach Nutzdaten in Datenbanken von unterhaltungselektronischen Geräten, insbesondere Fernsehgeräten, Video- und Audiosignale speichernden Geräten, mit einem Display zur Darstellung selektierter Nutzdaten, welches Display von einem alphanumerischen und/oder einem Grafik-Prozessor angesteuert wird, sind folgende Verfahrensschritte vorgesehen:
a) Darstellen von Suchbegriffen auf dem Display,
b) Zuordnen eines Eingabefeldes oder einer Einstellmöglichkeit zu jedem Suchbegriff mit Hilfe von Auswahlmitten auf einer Fern- oder Ortsbedienung am Gerät,
c) Auswählen mindestens eines Suchbegriffes,
d) Suche nach Einträgen in einem semantischen Wörterbuch, die dem oder den eingegebenen Suchbegriffen semantisch am nächsten kommen.

## Beschreibung

Die Erfindung betrifft ein Verfahren zur Suche nach Nutzdaten in Datenbanken von unterhaltungselektronischen Geräten, insbesondere Fernsehgeräten, Video- und Audiosignale speichernden Geräten, mit einem Display zur Darstellung selektierter Nutzdaten, welches Display von einem alphanumerischen und/oder einem Grafik-Prozessor angesteuert wird.

Aus der EP 0 753 235 B2 und aus der DE 44 10 547 C2 ist ein Verfahren zur Erstellung einer elektronischen Programmzeitschrift für Fernseh- und/oder Tonrundfunkprogramme in einem Empfangsgerät für Fernseh- und/oder Tonrundfunksignale von verschiedenen Sendeanstalten bekannt, die Programmdaten und/oder Programminformationen der eigenen Sendeanstalt und/oder anderer Sendeanstalten oder Dienstanbieter mit dem analogen oder digitalen Fernsehsignal oder über einen Servicekanal senden oder in Kabelnetze einspeisen und/oder Programmdaten und/oder Programminformationen als Vorabinformationen zu Fernseh- und/oder Tonrundfunksendungen senden oder in Kabelnetze einspeisen oder auf einem auslesbaren Speichermedium gespeichert anbieten. Den Programmdaten und/oder Programminformationen sind Abstimmdaten zum Abstimmen des Empfängers in Abhängigkeit von diesen Informationen zugeordnet. Der Empfänger stimmt mittels der Abstimmsteuerschaltung auf einzelne Programme der Sendeanstalten aus der tabellarischen Übersicht der Programme ab, wenn ein solcher Programmbeitrag ausgewählt ist. Hierfür stellt das Gerät eine extrahierte Liste der Programmbeiträge bereit, aus denen der Benutzer einen Programmbeitrag auswählen kann. Die Abstimmdaten können auch als Vor-Programmierdaten zum Einschalten des Gerätes oder zum Ansteuern eines angeschlossenen Audio- oder Videoaufzeichnungsgerätes verwendet werden. Die Abstimmdaten können den Programmbeitragsdaten direkt zugeordnet sein, es kann aber auch ein Zeiger auf einen entsprechenden, abgespeicherten Kanal verweisen, unter dem der Programmbeitrag abstimmbar ist. Die in Übersichtstabellen in der elektronischen Programmzeitschrift auf dem Bildschirm bzw. Display eines Fernsehgerätes dargestellten Titel der Programmbeiträge lassen sich themenmäßig oder auch in Anlehnung an die Übertragungszeiten uhrzeitmäßig gruppieren. So ist beispielsweise eine Sortierung der Titel in die Kategorie "Spielfilme" und gegebenenfalls in eine Unterkategorie "Cowboyfilme" möglich. Andere Sortierungsprofile kann der Benutzer definieren. Er erhält somit eine Übersicht der empfangbaren Programmbeiträge in einer selektierten Form. Die Schriften geben darüber hinaus an, dass entsprechend der vom Sender übermittelten Programmübersichten die Titel der Programmbeiträge unsortiert, bestenfalls nach Sendebeginn sortiert, dargestellt werden. Des Weiteren ist der Schrift zu entnehmen, dass für die Darstellung der EPG- Daten laufende Nummern und/oder die Programmbezeichnung des entsprechenden Senders, wie beispielsweise BR 3, WDR 1, NDR 3, bbr und ARD 1, vorangesetzt werden.

Ähnliche Darstellungen sind aus der EP 1 094 665 A1 bekannt. In dieser Schrift sind Kategoriezuordnungen auch unter Verwendung von auf dem Bildschirm dargestellten "Icons" bzw. "Softwarebuttons" möglich. In einer ersten Menüebene sind diese dargestellt und können mit einem Cursor angefahren und ausgewählt werden. In einer weiteren Ebene sind dann die Programmbeiträge dem Titel nach dargestellt. Aus allen Schriften ist es ferner bekannt, die Titel der Programmbeiträge in einer Vorschau uhrzeitmäßig zugeordnet in Spalten oder in einer Matrix anzuzeigen. In jedem Fall kann der Benutzer einen Titel durch Cursorauswahl oder durch Eingabe einer laufenden Nummer - falls dies vorgesehen ist - auswählen, wobei eine Abstimmung des Empfängers auf das ausgewählte Programm, das den Programmbeitrag sendet, erfolgt, wenn die Sendung bereits begonnen hat. Die Auswahl des Programmbeitrags kann im anderen Fall dazu führen, dass eine Vorprogrammierung des Empfängers oder eines mit dem Empfänger verbundenen Aufzeichnungsgerätes erfolgt. Mit Erreichen der Sendestartzeit wird der Empfänger entweder auf das so vorprogrammierte Programm umgeschaltet oder eingeschaltet oder die Aufnahme des Programmbeitrags ausgelöst, wobei in bekannter Weise beispielsweise VPS-Signale mit herangezogen bzw. ausgewertet werden.

Die erstgenannten Schriften geben ferner an, dass die Programmdaten und -informationen sowohl den Videotextseiten analoger Fernsehsignale als auch dem Datenstring digitaler Fernsehsignale entnommen werden können. Bei Anwendung der bekannten Lehren im Audiobereich können die Daten aber auch RDS-Daten oder mit dem digitalen Rundfunksignal übertragene Programmdaten sein. Des Weiteren können diese Daten auch einer DVD, CD oder einem anderen optischen oder magnetischen oder sonstigen auslesbaren Speicher entnommen werden. Sie können auch über Servicekanäle übertragen oder über Internet abgerufen werden, sofern das Gerät über eine entsprechende Schnittstelle verfügt. Dies gilt auch in Bezug auf die vorliegende Erfindung.

Des Weiteren sind Fernsehgeräte bekannt, mit denen auch analoge oder digitale Audiosignale empfangen werden können. Die Titel der Programmbeiträge sind auch in solchen Geräten auf dem Bildschirm als Vorinformation darstellbar und können genauso ausgewertet werden wie die Programmdaten, die zu den Fernsehsignalen übertragen werden. Auch auf solche Geräte ist das erfindungsgemäße Verfahren anwendbar.

Bei Fernseh- und Rundfunkgeräten, die keine EPG-Signalauswertung vornehmen und die Daten darstellen, ist es jedoch üblich, die Programme listenmäßig darzustellen, auf die der Empfänger abgestimmt werden kann, wenn er die entsprechenden Tunereinrichtungen aufweist. Die Darstellung zeigt in der Regel Senderkurzbezeichnungen, wie ARD, ZDF, Pro7 etc. Diesen Bezeichnungen können laufende Nummern vorangesetzt oder ergänzend hierzu auch die Empfangskanäle angegeben werden. Durch Cursorauswahl oder Auswahl der vorangestellten laufenden Nummer ist das Empfangsgerät dann auf den Kanal abstimmbar, über den das Programm, das von einem Sender gesendet wird, empfangbar ist. Bedingt durch die Vielzahl der empfangbaren Programme ist es bekannt, die Reihenfolge nach Benutzergewohnheiten zu sortieren und die Übersicht danach auszurichten, so dass die beliebtesten Programme den Programmen vorangestellt dargestellt und die übrigen Programme, deren Programmbeiträge seltener aufgerufen werden, nach der Häufigkeit der Aufrufe hinten angereiht werden.

Aus der WO 99/04559 A1 ist ein Verfahren bekannt, bei dem in einer tabellarischen Übersicht, die alphabetisch angelegt ist, die einzelnen Programme aufgelistet und zu jedem Programm zugeordnet, gegenwärtig und nachfolgend empfangbare Programmbeiträge in Feldern in horizontalen Zeilen eingetragen sind. Der Benutzer kann sowohl aus dem Programmbeitragsfeld als auch durch Auswahl des Programms eine Abstimmung des Fernsehempfangsgerätes auslösen.

Es ist darüber hinaus bei Fernsehgeräten bekannt, Bedienungsanleitungen und Bedienungsführungen zu implementieren, die auf Textsuchsystemen basieren. Bei einer Geräteausführung ist dabei vorgesehen, dass das Alphabet angezeigt wird und aus dem Alphabet eine Buchstabenauswahl getroffen werden kann. Den Buchstaben sind Suchbegriffe hinterlegt, beispielsweise unter "L" Lautstärke oder unter "P" Programmauswahl. Wird dieser Suchbegriff dann angewählt, erhält der Benutzer detailliertere Informationen zu der jeweiligen Funktion und wie diese zu bedienen ist. Dabei können auch grafische Abbildungen des Fernbedienungsgebers oder der am Gerät vorhandenen Ortsbedienung mit eingeblendet werden, um die Tasten zu markieren, die bedient werden müssen.

Die Datenbestände in Geräten der Unterhaltungselektronik und die darin enthaltenen Informationsmengen steigen zunehmend an. Mit der Einführung des digitalen Fernsehens hat die verfügbare Datenmenge eine neue Dimension erhalten. Im Wesentlichen werden mit diesen Daten auch Informationen übertragen, die zum Aufbau einer elektronischen Programmzeitschrift (EPG: Electronic Programm Guide) im Endgerät verwendet werden. Darüber hinaus werden auch, insbesondere bei digitalem Radio, Informationen als Textinformationen laufend mit übertragen, die angezeigt werden, beispielsweise Staumeldungen, Titel und Interpretationsanzeigen usw. Des Weiteren werden zusammen mit den EPG-Daten auch die Übertragungszeiten mit übertragen, um beispielsweise Video- oder Audioaufzeichnungen vorprogrammieren zu können, wobei analoge und digitale Aufzeichnungsgeräte ebenfalls zu den consumerelektronischen Geräten gemäß der Erfindung gehören, wie auch digitale und analoge Radioempfangsgeräte und TV-Geräte, Harddisc-Recorder und andere Aufzeichnungsgeräte.

Eine Suche in diesen umfangreichen Datenbeständen mit Fernbedienung ist sehr umständlich und kompliziert. Mit heute gängigen Methoden können nur Anzeigelisten erstellt werden, die nach wenigen Suchkriterien sortiert sind, beispielsweise bei EPG-Daten z.B. Zeit, Programmname, Genre, wie anhand des Standes der Technik aufgezeigt wird. Das Auffinden der gewünschten Informationen ist damit in größeren Datenbeständen, insbesondere bei Fernsehempfangsgeräten, mit denen weit über 500 Fernsehprogramme und Audioprogramme via Satellit, Kabel und/oder terrestrisch empfangen werden können, sehr mühsam. Zudem erfordert eine herkömmliche Datenbankabfrage, dass der Benutzer die Suchbegriffe für die Datenabfrage genau eingibt.

Es sind allerdings Algorithmen bekannt, die die semantische Nähe eines Begriffes zu einem anderen Wort oder Begriff zahlenmäßig bewerten. Mit Hilfe dieser Algorithmen ist es möglich, Suchergebnisse zu erzielen, ohne den genauen Begriff eingeben zu müssen. Beispielsweise haben die Begriffe "Humor", "Witz", "Komödie" eine hohe semantische Nähe zu "Spaß". Aus der Anzahl der Wörter mit semantischer Nähe zu einem Suchbegriff und deren Gesamtgewichtung kann eine Trefferrate für den eingegebenen Suchbegriff gebildet werden und ein Suchergebnis präsentiert werden.

Aus der EP 1 079 612 A2 ist ein Elektronikprogramm-Guide-Suchsystem (EPG) bekannt, das einen Spracherkenner mit einem Parser zum Extrahieren von semantischen Informationen aus der von einem Benutzer eingegebenen Sprache, einen Datenspeicher zum Speichern einer Vielzahl von elektronischen Programmen, ein Zuordnungsmodul, das mit dem Datenspeicher zum Erneuern des Inhaltes des Datenspeichers durch Daten von einer Quelle der elektronischen Programmführerinformationen verbunden ist, und einen Dialogmanager zum Filtern der gespeicherten Programminformation, basierend auf den semantischen Informationen und zum Absichern des Benutzers mit Informationen über empfangbare Programme in Bezug auf die eingegebene Sprache des Benutzers aufweist.

Ein vergleichbar arbeitendes System ist ferner aus der EP 1 265 227 B1 als Informationsfiltersystem für ein Haushaltsnetzwerk mit einer Vielzahl von darin kommunizierenden Haushaltskomponenten bekannt. Dieses Filtersystem umfasst einen Spracherkenner mit einem Parser zum Extrahieren von semantischen Informationen aus der von einem Benutzer eingegebenen Sprache, wobei der Parser zusammen mit einer gewählten elektronischen Tätigkeitsführung arbeitet. Das Filtersystem enthält ferner einen Datenspeicher, in dem eine Vielzahl von elektronischen Tätigkeitsführungen gespeichert ist, die der Vielzahl von Haushaltskomponenten entsprechen und auf den semantischen Informationen basieren. Die auf den Haushaltskomponenten assoziierten Informationen werden gefiltert bereitgestellt, wobei ein Mittel zum Wählen der besten elektronischen Tätigkeitsausführung durch Identifizieren der Grammatik, die den höchsten semantischen Erkennungsscore liefert, vorgesehen ist. Dieses spezielle Spracherkennungssystem für die Abstimmung ist anfällig, wie hinlänglich bekannt, da die Spracheingabe derart gefiltert sein muss, dass die Sprachen voll erkannt werden, was nur mit sehr hohem Aufwand realisierbar ist.

Der Erfindung liegt die Aufgabe zugrunde, ein Verfahren anzugeben, das eine wesentlich vereinfachte Suche nach Nutzdaten innerhalb der Datenbank oder der Datenbanken des Gerätes oder der über das Gerät angeschlossenen, direkt ansprechbaren, externen Datenbanken ermöglicht. Dabei soll auf eine exakte Formulierung der Suchanfrage oder auf eine Spracheingabe verzichtet werden können.

Die Aufgabe wird erfindungsgemäß durch Anwendung des im Anspruch 1 angegebenen Verfahrens bei unterhaltungselektronischen Geräten gelöst.

Dieses Verfahren bedient sich bei den Suchanfragen intelligenter Bedienoberflächen. Das Gerät, z.B. ein Fernsehgerät, bedient sich dabei verschiedener Algorithmen, um auf schnellem Wege eine Suchanfrage in den Datenbanken des Gerätes und/oder in den angeschlossenen Datenbanken vornehmen zu können, um gewünschte Auskünfte zu erhalten. Durch das intelligente Suchsystem wird es dem Benutzer besonders einfach gemacht, beispielsweise Wunschprogramme oder Programmbeiträge aus den EPG-Datenbeständen auf einfache Weise zu extrahieren. Diese Daten können entweder über Servicekanäle oder mit den Programmen empfangen, decodiert und abgespeichert werden. Sie werden als Nutzdaten in der Datenbank abgelegt. Die Daten können aber auch über Internet abgerufen werden, wenn das Gerät eine Internetschnittstelle aufweist. Des Weiteren können die Nutzdaten auch auf CDs gespeichert sein und dann vom Gerät, das ein CD-Laufwerk aufweist, angesprochen oder abgerufen werden. Ebenso können die Nutzdaten in ansteckbaren Speichern gespeichert sein. Dies hängt jeweils von der Geräteausführung ab. Bei allen Ausführungen ist jedoch vorgesehen, dass dann, wenn beispielsweise mit der Fernbedienung das Suchmenü am Bildschirm aufgerufen wird, eine Eingabemaske für die Suchbegriffe auf dem Display dargestellt wird. Es können entweder Suchbegriffe textuell eingegeben werden und/oder ein Suchbegriff durch Auswahl aus einer Liste ausgewählt werden und/oder die gewünschte Ausprägung eines Suchbegriffs nach vorgegebenen Kriterien eingeben werden. Beispielhaft kann der Benutzer nach einer Sendung mit viel Spaß, wenig Erotik und viel Action suchen. Diese Sucheinstellungen können beispielsweise mittels der Cursorsteuerung und des Bildschirmmenüs vorgenommen werden.

Hilfreich für das erfinderische Verfahren ist es, wenn in einem Speicher ein semantisches Wörterbuch hinterlegt ist, so dass nach Bedeutungsinhalten gesucht werden kann, wenn die Suchbegriffe ungenau sind oder viele Bedeutungen besitzen. Ein solches Wörterbuch muss allerdings, bezogen auf EPG-Anwendungen, sehr umfangreich sein, damit beispielsweise unter dem Begriff "Spannung" nach diversen Bedeutungsworten gesucht wird. Diese einzelnen Bedeutungsworte werden mit einem Algorithmus gewichtet, wie nahe sie dem Wunschwort kommen, und dann zur Auswahl angezeigt. Ein solches Wörterbuch ist beispielsweise von Dornseiff herausgegeben worden.

Wird hingegen nach dem erfinderischen Verfahren in einer Bedienungsanleitung, die im Gerät ist, gesucht, so braucht hier nicht ein so umfangreiches Wörterbuch bereitgestellt werden. Andererseits sind dort mehrere technische Ausdrücke zu implementieren, so dass ein spezielles semantisches Wörterbuch, was auf Bedienungsanleitungen abgestimmt ist, hinterlegt sein sollte.

Die Erfindung ist also nicht auf eine Anwendung, wie EPG beschränkt oder auf ein Suchsystem in elektronisch gespeicherten Bedienungsanleitungen in einem Gerät, sondern kann erweitert werden auf alle möglichen Zugriffe, die über das Gerät möglich sind. So ist es auch möglich, mit dem gleichen Verfahren in angeschlossenen Rechnern, die über Internetzugang erreicht werden, entsprechende Suchen durchzuführen.

In weiterer Ausgestaltung der Erfindung ist auch vorgesehen, dass semantische Wörterbücher heruntergeladen werden können, um für spezielle Anwendungen entsprechende Wörterbücher bereitstellen zu können.

Das Verfahren ist nicht nur auf eine Sprache beschränkt, sondern kann selbstverständlich auch für andere Sprachen angewendet werden. Auch in diesem Fall ist es empfehlenswert, einen Internetzugang im Gerät vorzusehen, um darüber Wörterbücher in der jeweilig gewünschten Sprache abrufen und Downloads vornehmen zu können.

Wenn die Einstellungen der Suchbegriffe und/oder die textuelle Eingabe vorgenommen wurden, kann die Suche durch einen Fernbedienbefehl ausgelöst werden.

Die verschiedenen Suchmechanismen, die die Semantik der Begriffe berücksichtigen, sind als solche in anderen Bereichen bekannt. In der Datenbank wird in den Beschreibungen zu den einzelnen Sendungen nach Wörtern gesucht, die in ihrer Semantik den eingegebenen Suchkriterien am nächsten kommen. Die Einträge, die am besten mit den Suchkriterien übereinstimmen, werden dem Benutzer als Vorschlag angeboten.

Wie lang diese Liste ist und welcher Zeitraum angezeigt wird, ist vorprogrammierbar oder kann auch durch eine Zeitwahl auf dem Bildschirm ausgewählt werden, zu welchem Zweck Auswahlfelder angezeigt werden können, die bei Auswahl markiert werden. In jedem Fall erhält der Benutzer anhand des eingegebenen Suchbegriffes eine Übersicht über die empfangbaren Sendungen, die am besten seine Suchkriterien erfüllen.

Selbstverständlich kann das Verfahren auch für die Bedienerführung angewendet werden. Die Begriffe im Suchmenü beziehen sich dann auf die Bedienfunktionen des Gerätes. Beispielsweise kann dies das Suchfeld "EPG" sein oder "Fernbedienung" oder "Kochrezepte" bei Geräten, die im Küchenbereich aufgestellt sind und über entsprechende Datenbanken verfügen. In hierarchischer Anordnung können dabei auch Unterseiten mit zusätzlichen Suchbegriffen für die Auswahl angezeigt werden, wenn eine entsprechende Strukturierung vorgesehen ist. Der Benutzer muss dabei nicht die genaue fachliche Bezeichnung eingeben, sondern kann einen umgangssprachlichen Begriff verwenden.

Es kann aber auch auf dem Bildschirm einem übergeordneten Suchbegriff ein elektronisches Stellorgan zugeordnet sein und durch Betätigen des Stellorgans, beispielsweise eines Schiebesymbols oder eines Drehsymbols, jeder untergeordnete Suchbegriff ausgewählt werden. An einem Beispiel wird dies nachfolgend erläutert: Der Hauptbegriff ist "Kriminalfilm". Wird nun das Stellorgan mit dem Cursor oder mit der Fernbedienung betätigt, beispielsweise schrittweise fortgeschaltet, so erscheint als nächstes unter "Kriminalfilm" der Begriff "Psychokriminalfilm" oder "Film mit Mord", "Film mit Raub", "Film mit Vergewaltigung" etc. Auf diese Weise ist einfach verständlich für den Benutzer eine Filmkategorie auswählbar, um die EPG-Daten eines Films angezeigt zu erhalten, der der ausgewählten Kategorie entspricht. Wird das System während einer bestimmten Zeitdauer, beispielsweise 30 Sekunden, nicht benutzt, so wird es automatisch zurückgestellt und der laufende Empfangsbetrieb wird fortgesetzt. Dies gilt sowohl für Videogeräte als auch für Audio- und Video-Audiogeräte-Kombinationen gleichermaßen.

Die Stellorgane können darüber hinaus in einer anderen Zuordnung für die Bewertung der Suchbegriffe bei der Zusammenstellung verwendet werden. Soll ein Kriminalfilm beispielsweise überwiegend Aktion und Spannung enthalten, so kann hier die Wertigkeit entsprechend eingestellt werden. Diese Wertigkeit ist auch unter Hinzufügung von derartigen Begriffen während der Betätigung des Einstellorgans möglich. Der Prozessor wertet die Einstellungen aus und sucht aus den möglichen Angeboten die Filmangebote heraus, die den Wertvorstellungen des Benutzers entsprechen.

Es ist aber auch möglich, beispielsweise Eigenschaftsangaben auf dem Display anzuzeigen und daraus auszuwählen oder mit einem Stellorgan zu versehen, um sie in der Reihenfolge bewerten zu können. Beispielsweise kann "Spaß", "Spannung", "Aktion", "Anspruch" oder "Erotik" angezeigt werden. Wählt nun der Benutzer daraus eine Kombination aus, so erhält er automatisch ein EPG-Angebot, das diesen Wertbegriffen gerecht wird. Er kann darüber hinaus bei Anbringung von Stellorganen eine unterschiedliche Gewichtung dieser Begriffe vornehmen. Beispielsweise kann das Angebot "Spaß" 60% betragen, während "Action" nur mit 10% zu bewerten ist etc. So kann der Benutzer auch darüber ein Persönlichkeitsprofil vorgeben. Der Prozessor wertet dies nach einem eingeschriebenen Algorithmus aus und wählt aus der Vielzahl der empfangbaren Programme den Filmbeitrag aus, der diesen Wünschen entspricht.

Die Suchbegriffe sind in keinster Weise beschränkt. Es können auch ein oder mehrere Felder vorgesehen sein, in die durch alphanumerische Eingabe Begriffe der Umgangssprache eingegeben werden, die zusätzlich vom System mit ausgewertet werden. Es ist ersichtlich, dass durch das System, bezogen auf die EPG-Nutzdaten, eine sehr einfache Programmauswahl für den Benutzer möglich wird, ohne Listen über 500 Programme bzw. noch mehr Programmbeiträge durchsehen zu müssen, um daraus eine Auswahl zu treffen. Da es hier auf eine direkte Kommunikation zwischen Mensch und Maschine ankommt, braucht auch eine an sich bekannte Vorgruppierung und Kategorisierung der Programmbeiträge durch den Sender, beispielsweise nach Spielfilmarten, nicht vorgenommen zu werden. Der Benutzer kann stets frei im Angebot wählen und erhält nach Zusammenstellung von Suchbegriffen gewünschte Informationen.

Im Falle, dass es sich bei den Nutzdaten um EPG-Daten handelt, sind diesen Daten Abstimmdaten zugeordnet, so dass bei Anzeige der Liste sofort ein bestimmter Programmbeitrag ausgewählt werden kann, wenn das Zeitfenster der Sendung mit der Ist-Zeit übereinstimmt. Kann die Sendung aber erst später empfangen werden, so kann auch eine Vorprogrammierung hieraus in bekannter Weise vorgenommen werden.

Das Suchsystem kann auch Personennamen mit einschließen, beispielsweise die von Schauspielern, um hierüber nach Beiträgen suchen zu können. Das System lässt alle Möglichkeiten offen, da es letztendlich auch die freie Textsuche innerhalb der Datenbank ermöglicht. Es können aber auch die Nutzdaten bereits nach Suchbegriffen in den Datenbanken strukturiert werden, so dass bei übereinstimmendem eingegebenen Suchbegriff und hinterlegtem Suchbegriff sofort Zugriff auf die entsprechenden Informationen gegeben ist, ohne den gesamten Text maschinell durchsuchen zu müssen.

Die Erfindung wird anhand der beiden Displayabbildungen in den Zeichnungen ergänzend erläutert.

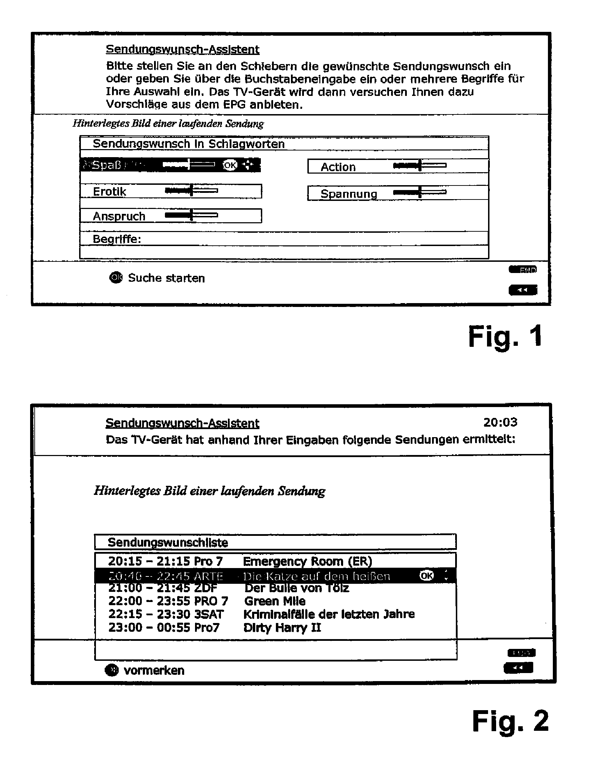

Im Rahmen der freien Textsuche können beispielsweise die Auswahlmöglichkeiten "Spaß", "Spannung", "Aktion", "Anspruch" und "Erotik" angezeigt werden. Der Benutzer wird dadurch oder auch mit textlicher Darstellung im Bild aufgefordert, anhand der dargestellten Suchbegriffe eine Auswahl zu treffen. Hierzu können die symbolisch dargestellten Schieberegler verwendet werden. Nach erfolgter Auswahl wird dann eine Sendungswunschliste vom Gerät nach eingeschriebenem Algorithmus extrahiert und dargestellt, die dem Anforderungsprofil gerecht wird. Dies ist in Figur 1 dargestellt. Der Rechner ermittelt anhand eines Algorithmus auch Suchbegriffe, die in ihrer Semantik den eingegebenen bzw. ausgewählten am nächsten kommen. Sodann werden die Einträge und semantischen Suchbegriffe mit den Begriffen in den Sätzen, Titeln, Beschreibungen und dergleichen verglichen. Stimmen diese mit den Suchkriterien überein, wird eine Anzeige extrahiert, die eine Übersicht oder gezielte Auskünfte zu bestimmten Auswahlthemen vermittelt. Dies kann beim EPG eine Senderwunschliste sein, aus der der Benutzer dann eine Auswahl treffen kann, wie aus Figur 2 ersichtlich. Mittels der dargestellten Schiebeeinstellelemente in Figur 1 kann auch eine Wertung vorgegeben werden, die der Rechner bei der Auswahl berücksichtigt. Soll z.B. ein Sendebeitrag viel Spannung beinhalten, so kann der Einsteller zum Beispiel hoch eingestellt werden.

Es kann im Rahmen einer Weiterbildung vorgesehen sein, dass von einer bestimmten Darstellung auch Unterseiten generiert werden. Der Sendungswunschassistent, der im Gerät implementiert ist, öffnet hierzu mit den zuletzt eingestellten Werten und Begriffen. Dadurch wird auch eine wiederholte Abfrage vermieden. Danach kann dann eine erneute Auswahl, beispielsweise nach den vorgenannten Eigenschaften, getroffen werden.

Das Beispiel zeigt, dass dem Fachmann durch die Erfindung verschiedene Möglichkeiten der Auswahl aufgezeigt werden.

Der Vorteil der Erfindung ist offensichtlich.

Zum Beispiel werden bei den heutigen EPGs zu den jeweiligen Programmtiteln noch Zusatzbeschreibungen übertragen. Diese Texte werden durch ein Programm analysiert und auf ihre semantische Nähe zu eingegebenen Suchbegriffen hin überprüft. Der Benutzer muss also nicht den genauen Suchbegriff eingeben, um einen Treffer in der Datenbank zu erzielen. Wenn er beispielsweise den Begriff "Krimi" eingibt, dann ergeben auch Datenbankeinträge wie "Kriminalfilm", "Thriller", "Mord", "Pistole" Treffer, die - je nach semantischer Nähe zu "Krimi" - zahlenmäßig gewichtet werden. Wenn also in einer Beschreibung viele Begriffe vorkommen, die nahe beim Suchbegriff liegen, dann wird angenommen, dass dieser Eintrag in hohem Maß dem Suchbegriff entspricht, auch wenn der Begriff selbst in der Beschreibung gar nicht vorkommt.

Das gleiche Verfahren kann zur Suche nach Begriffen in der eingebauten Bedienungsanleitung benutzt werden. Heute muss der Benutzer beispielsweise den Fachbegriff "SCART" kennen, um nach einer Beschreibung zu suchen, wie man externe Geräte an das Fernsehgerät anschließen kann. Mit dem beschriebenen Verfahren reicht es, wenn er einen der Begriffe "Gerät", "Player", "Recorder" usw. und "anschließen", "verbinden", "anstecken" usw. eingibt, um auf einen Beitrag zu stoßen, der den Anschluss externer Geräte beschreibt.

Die Suchbegriffe können aus einer Liste (ja/nein) ausgewählt und/oder der Grad der Ausprägung des Begriffes z. B. über Einstellorgane (Schieberegler) im Menü eingestellt werden: wenig, mittel, viel Spaß, oder als Prozentangabe und/oder der/die Begriff(e) in ein Eingabefeld frei formuliert eingegeben werden.

Die Suchergebnisse werden in einer Liste sortiert und nach Trefferwahrscheinlichkeit der Sendung angezeigt, z.B. auch unter Angabe der Sendeanfangs- und Sendeendzeiten. Der Benutzer kann dann aus den Suchergebnissen das gewünschte Programm zum Ansehen oder Aufnehmen auswählen.

Der Zeitraum für die ausgewählten Programme kann beispielsweise auf jetzt gerade oder in kürze laufende Sendungen eingeschränkt werden. Es ist auch möglich, einen Zeitraum explizit anzugeben. In einer weiteren Ausprägung kann man auch angeben, welche Inhalte nicht vorkommen dürfen (z. B. keine Erotik). Die Einstellung von "Anspruch", "Erotik" usw. mit Schiebereglern entspricht der Bewertung, die man in manchen Fernsehzeitschriften findet: Dort werden die Programmbeiträge nach diesen Kriterien bewertet.

## Patentansprüche

1. Verfahren zur Suche nach Nutzdaten in Datenbanken von unterhaltungselektronischen Geräten mit einem Display zur Darstellung selektierter Nutzdaten, welches Display von einem alphanumerischen und/oder einem Grafik-Prozessor angesteuert wird, **gekennzeichnet durch** folgende Verfahrensschritte:
a) Darstellen von Suchbegriffen auf dem Display,
b) Zuordnen eines Eingabefeldes oder einer Einstellmöglichkeit zu jedem der Suchbegriffe, unter Zuhilfenahme von Auswahlmitteln auf einer Fern- oder Ortsbedienung am Gerät,
c) Auswählen oder Einstellen mindestens eines Suchbegriffes mit dem Auswahlmittel,
d) Übertragen der ausgewählten Suchbegriffe und der damit verbundenen Einstellwerte an einen Prozessor des Gerätes zum Vergleich mit den Suchbegriffen oder den Nutzdateninhalten in der Datenbank,
e) Darstellen von Nutzdaten, die den Suchbegriffen und/oder solchen, die diesen semantisch am nächsten kommen oder denen derartige Suchbegriffe in einem bestimmten Anzeigeformat zugeordnet sind.

2. Verfahren nach Anspruch 1, **dadurch gekennzeichnet, dass** die Suchbegriffe den Nutzdaten eines elektronischen Programmführers (EPG) zugeordnet sind und dass in der Datenbank eines unterhaltungselektronischen Gerätes empfangene EPG-Nutzdaten abgespeichert und aus dieser anhand der Suchbegriffe tabellarische Zusammenstellungen der Nutzdaten von dem Prozessor generiert und in einer Tabelle geordnet für die Darstellung und die Auswahl zum Abstimmen auf den zugeordneten Sender bereitgestellt werden.

3. Verfahren nach Anspruch 2, **dadurch gekennzeichnet, dass** den EPG-Daten automatisch die Frequenzdaten oder Zeiger für die Abstimmung zugeordnet werden, um den Tuner auf den Sender abstimmen zu können, der den ausgewählten Programmbeitrag sendet.

4. Verfahren nach Anspruch 1, **dadurch gekennzeichnet, dass** zusätzlich auf dem Display ein Anzeigefeld zur Eingabe wahlfreier Suchbegriffe, vorzugsweise der Umgangssprache, dargestellt wird.

5. Verfahren nach Anspruch 1, **dadurch gekennzeichnet, dass** mehrere Suchbegriffe miteinander kombiniert werden und dass der Prozessor Nutzdaten aus der Datenbank für die Generierung einer Liste solcher Suchbegriffe in der Reihenfolge der Häufigkeit der semantischen Übereinstimmung der Suchbegriffe mit den gesuchten Daten ausliest.

6. Verfahren nach Anspruch 1, 4 oder 5, **dadurch gekennzeichnet, dass** jedem Suchbegriff ein elektronisches Stellorgan auf dem Display zugeordnet ist, dass beim Betätigen des Stellorgans über eine Fern- oder Ortsbedienung am Gerät untergeordnete oder weitere Suchbegriffe zur Auswahl angezeigt werden und dass diese oder Kombinationen mit anderen Suchbegriffen zur Auswahl einer Liste von Nutzdaten aus den gespeicherten Nutzdaten herangezogen werden.

7. Verfahren nach Anspruch 1, 4 oder 5, **dadurch gekennzeichnet, dass** jedem Suchbegriff ein elektronisches Stellorgan auf dem Display zugeordnet ist, dass den elektronischen Stellorganen Bewertungsindizes zugeordnet sind, anhand derer der Prozessor nach eingeschriebenem Programm eine Bewertung der ausgewählten Suchbegriffe durchführt und in Anlehnung an die Bewertungsstruktur aller ausgewählten Begriffe eine Auswahl der Nutzdaten aus der Datenbank vornimmt.

8. Verfahren nach Anspruch 2, **dadurch gekennzeichnet, dass** die Datenbank über einen EPG-Datendecoder, der mit dem Demodulator des Gerätes verbunden ist, gespeist wird und/oder über einen schnurgebundenen, leitungsgebundenen oder schnurlosen Telekommunikationsanschluss Daten von Internetdatenbanken erhält oder auf diese nach Auswahl eines oder mehrerer Suchbegriffe vom Prozessor zugegriffen wird, wenn die Internetdatenbankinhalte nicht in die Gerätedatenbank übernommen wurden.

9. Verfahren nach Anspruch 2 oder 3, **dadurch gekennzeichnet, dass** in der Liste der EPG-Nutzdaten, die den Programmbeitragswünschen entsprechen, die Programmbeiträge mit angezeigt und in Sendezeit-Reihenfolge dargestellt werden.

10. Verfahren nach Anspruch 9, **dadurch gekennzeichnet, dass** aus der Liste eine Vorauswahl oder eine Direktabstimmung der Empfängerschaltung erfolgt.

11. Verfahren nach Anspruch 1, **dadurch gekennzeichnet, dass** die Suchbegriffe den Nutzdaten der Einträge in einer integrierten elektronischen Bedienungsanleitung zugeordnet sind.

12. Verfahren nach Anspruch 1, **gekennzeichnet durch** die Anwendung in einem Fernsehgerät und/oder in einem Video- und Audiosignal speichernden Gerät.

13. Verfahren nach Anspruch 1, **dadurch gekennzeichnet, dass** mindestens ein semantisches Wörterbuch im Gerät abgespeichert ist, auf das der Prozessor zugreift, um gewichtete Suchbegriffe bei Eingabe ungenauer Suchbegriffe für die Auswahl anzuzeigen.

14. Verfahren nach Anspruch 13, **dadurch gekennzeichnet, dass** das Gerät einen Internetanschluss aufweist und das Wörterbuch herunterladbar ist oder der Prozessor über den Internetanschluss auf ein solches semantisches Wörterbuch zugreift.
